## Europäisches Patentamt
## European Patent Office
## Office européen des brevets

(11) Veröffentlichungsnummer: **0 307 602**
**A1**

(12) ## EUROPÄISCHE PATENTANMELDUNG

(21) Anmeldenummer: **88112537.1**

(22) Anmeldetag: **02.08.88**

(51) Int. Cl.⁴: **B62D 25/02 , B62D 33/04**

(30) Priorität: **04.09.87 DE 3729620**

(43) Veröffentlichungstag der Anmeldung:
**22.03.89 Patentblatt 89/12**

(84) Benannte Vertragsstaaten:
**BE DE FR GB IT NL**

(71) Anmelder: **GEBR. WACKENHUT GMBH**
**Karosserie- und Fahrzeugfabrik**
**Nagold/Schwarzwald**
**Altensteiger Strasse 49**
**D-7270 Nagold(DE)**

(72) Erfinder: **Überall, Waldemar**
**Gorskistrasse 3**
**A-1232 Wien(AT)**
Erfinder: **Finsterbusch, Peter**
**Weissdornweg 13**
**D-7270 Nagold(DE)**

(74) Vertreter: **Manitz, Gerhart, Dr. Dipl.-Phys. et al**
**MANITZ, FINSTERWALD & ROTERMUND**
**Seelbergstrasse 23/25**
**D-7000 Stuttgart 50(DE)**

(54) **Fahrzeugaufbau, insbesondere Kofferaufbau.**

(57) Der Fahrzeugaufbau besteht im wesentlichen aus plattenförmigen Elementen (2), die durch Profilteile (1) zwischen aneinander angrenzenden Rändern miteinander verbunden sind. Dazu besitzen die Profilteile (1) randseitige Profilbereiche (4) mit Nuten- bzw. Rinnenprofil mit sich keilförmig öffnendem Querschnitt. Darin sind die Ränder der plattenförmigen Elemente (2) bzw. an den Rändern angeordnete Randleisten bzw. -profile (6) aufgenommen und durch Verkeilung sowie Klebung gehaltert.

EP 0 307 602 A1

## Fahrzeugaufbau, insbesondere Kofferaufbau

Die Erfindung betrifft einen Fahrzeugaufbau, insbesondere einen Kofferaufbau, dessen Wände, Böden und/oder Decken im wesentlichen aus plattenförmigen Elementen bestehen, die durch Profilteile zwischen aneinander angrenzenden Rändern miteinander verbunden sind.

Kofferaufbauten von Nutzfahrzeugen besitzen in der Regel ein aus Profilteilen bestehendes Skelett mit zwischen den Profilteilen angeordneten plattenförmigen Elementen, die an den Profilteilen durch Nietung oder Schweißung befestigt sind.

Derartige Konstruktionen sind relativ anfällig gegen Korrosion. Dies beruht unter anderem darauf, daß im Bereich der Schweißzonen sowie in der Umgebung der Nieten feine Spalte vorhanden sind bzw. im Laufe der Zeit entstehen, in die Feuchtigkeit oder andere korrosionsverstärkende Verschmutzungen eindringen können. Hinzu kommt, daß das Material der Nieten bzw. die Materialzusammensetzung der Schweißzonen vom Material bzw. der Materialzusammensetzung der miteinander verbundenen Profilteile und plattenförmigen Elemente mehr oder weniger stark abweicht, so daß auch mit elektrolytischer Korrosion zu rechnen ist.

Als weiterer Nachteil der herkömmlichen Bauweise kommt hinzu, daß die Nieten jeweils nur punktuelle Verbindungen zwischen den plattenförmigen Elementen und den Profilteilen bilden. Prinzipiell Gleiches gilt bei Schweißverbindungen, da diese üblicherweise durch Punktschweißung hergestellt werden. Unter dem Einfluß extremer Temperaturschwankungen, z.B. bei Sonneneinstrahlung auf den Fahrzeugaufbau, suchen sich die plattenförmigen Elemente gegenüber den Profilteilen zu verschieben, wobei im Bereich der punktuellen Verbindungen (Nieten bzw. Schweißpunkte) sichtbare Verwerfungen auftreten können.

Deshalb ist es Aufgabe der Erfindung, einen Fahrzeugaufbau zu schaffen, bei dem eine besonders sichere und feste Verbindung zwischen den plattenförmigen Elementen und Profilteilen sowie ein guter Korrosionsschutz gewährleistet sind.

Diese Aufgabe wird bei einem Fahrzeugaufbau der eingangs angegebenen Art dadurch gelöst, daß die Profilteile randseitige Nuten- bzw. Rinnenprofile mit sich keilförmig öffnendem Querschnitt besitzen, in denen die Ränder der plattenförmigen Elemente bzw. an den Rändern angeordnete Randleisten bzw. -profile aufgenommen und durch Verkeilung sowie Klebung gehalten sind.

Aufgrund der erfindungsgemäßen Bauweise werden die Randzonen der plattenförmigen Elemente bzw. die dort angeordneten Randleisten bzw. -profile jeweils großflächig längs durchlaufender Klebstoffbahnen mit den Profilteilen verbunden. Dabei sichern und verstärken sich die Kleb- und Keilverbindungen gegenseitig. Denn die Verkeilung der plattenförmigen Elemente bzw. der Randleisten oder -profile in den Nuten- bzw. Rinnenprofilen der Profilteile wird aufgrund der zusätzlichen Verklebung praktisch unlösbar aufrechterhalten, und zwar auch dann, wenn das Fahrzeug überwiegend schlechte Wege befährt und starke Rüttelbeanspruchungen auftreten. Andererseits wird auch die Klebverbindung durch die Verkeilung gesichert und verstärkt, weil aufgrund der Verkeilung zwischen den miteinander verklebten Flächen praktisch keinerlei Kräfte senkrecht zu den Klebflächen auftreten können.

Im übrigen kann aufgrund der Verklebung eine praktisch fugen- und spaltenfreie Verbindung zwischen den plattenförmigen Elementen oder den Randleisten bzw. -profilen und den Profilteilen gewährleistet werden. Somit kann praktisch jegliche Korrosionsgefahr an den Verbindungszonen ausgeschlossen werden.

Eine besonders bevorzugte Bauweise ist dadurch gekennzeichnet, daß eine randseitig in die Rinnen- bzw. Nutenprofile hineinragende Außenhaut der plattenförmigen Elemente zwischen gegeneinander verspannten bzw. verkeilten Flächen der Rinnen- bzw. Nutenprofile sowie der Randleisten bzw. -profile eingeklemmt ist.

Damit besteht die Möglichkeit, die Außenhaut sowie die Randleisten bzw. -profile ohne vorherige Verbindung miteinander mit den Profilteilen zu verbinden, d.h. zu verkleben sowie zu verkeilen.

Dabei ist zweckmäßigerweise vorgesehen, daß die Außenhaut randseitig an einer Innenfläche des Rinnen- bzw. Nutenprofils der Profilteile sowie mit den Randleisten bzw. -profilen verklebt wird, die ihrerseits außerhalb ihres von der Außenhaut überdeckten Bereiches mit einer oder mehreren Innenflächen der Rinnen- bzw. Nutenprofile der Profilteile verklebt werden.

Gegebenenfalls kann aber auch die eine oder andere Klebverbindung weggelassen werden. Insbesondere kann es zweckmäßig sein, die Ränder der Außenhaut zwischen einander gegenüberliegenden Flächen der Profilteile sowie der Randleisten bzw. -profile innerhalb der Rinnen- bzw. Nutenprofile lediglich durch Klemmung zu haltern. Dies gilt insbesondere dann, wenn die Außenhaut aus Kunststoff bzw. aus beschichtetem Blech besteht.

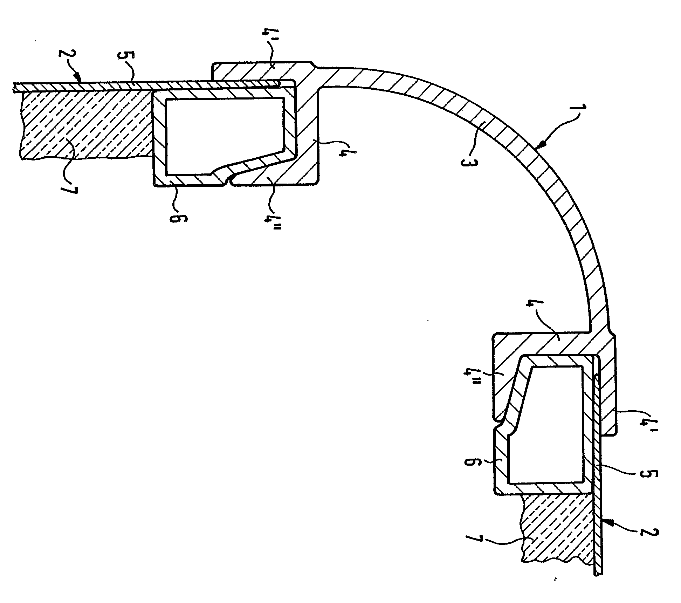

Im übrigen gehen bevorzugte Merkmale der Erfindung aus den Unteransprüchen sowie der nachfolgenden Erläuterung der Erfindung anhand eines in der Zeichnung dargestellten bevorzugten Ausführungsbeispieles hervor.

Dabei zeigt die einzige Figur ein Schnittbild eines Profilteiles sowie der daran angrensenden Bereiche der mit dem Profilteil verbundenen plattenförmigen Elemente.

Ein Profilteil 1 dient zur Verbindung zweier plattenförmiger Elemente 2.

Im dargestellten Beispiel bildet daß Profilteil 1 eine Ecke eines Fahrzeugaufbaues, dementsprechend besitzt das Profilteil 1 einen Mittelbereich 3 mit bogenförmigem Querschnitt. An den den plattenförmigen Elementen 2 zugewandten Rändern sind im Querschnitt U-förmige Profilbereiche 4 angeordnet, welche jeweils ein zu den plattenförmigen Elementen 2 hin geöffnetes Nuten- bzw. Rinnenprofil aufweisen. Dabei bildet die Innenseite des außenseitigen Schenkels 4' der Profilbereiche 4 mit dem die U-Schenkel 4' und 4" verbindenden Mittelbereich einen rechten Winkel, während der Mittelbereich und die Innenseite des gegenüberliegenden innenseitigen Schenkels 4" einen stumpfen Winkel bilden. Dementsprechend erweitert sich das Rinnen- bzw. Nutenprofil der Profilbereiche 4 keilförmig zu den plattenförmigen Elementen 2 hin.

Die plattenförmigen Elemente 2 bestehen im wesentlichen aus einer Außenhaut bzw. einem Außenblech 5 sowie randseitig angeordneten Randleisten bzw. -profilen 6, welche im dargestellten Beispiel als Hohlprofile ausgebildet sind. Die Randleisten bzw. -profile 6 sind zumindest bereichsweise derart keilförmig ausgebildet, daß sie zusammen mit der Außenhaut bzw. dem Außenblech 5 in den Profilbereichen 4 des Profilteiles 1 verkeilt werden können, wobei der Rand der Außenhaut bzw. des Außenbleches 5 zwischen der Innenseite des Schenkels 4' des Profilbereiches 4 und der zugewandten Seite der jeweiligen Randleiste bzw. des jeweiligen Randprofiles 6 eingeklemmt wird.

Die Sicherheit und Festigkeit der Keil- und Klemmverbindung wird noch dadurch erhöht, daß aufeinander aufliegende Flächen der Profilbereiche 4, der Außenhaut bzw. des Außenbleches 5 sowie der Randleisten bzw. -profile 6 miteinander verklebt sind, wobei der Klebstoff sämtliche Fugen bzw. Spalte zwischen den genannten Teilen ausfüllen kann.

Die Klebverbindung ihrerseits wird durch die Verkeilung zusätzlich verstärkt und gesichert, denn die Verklebung wird aufgrund der Verkeilung praktisch nur durch solche Kräfte beaufschlagt, welche etwa parallel zur Ebene der miteinander verklebten Flächen liegen. In dieser Richtung ist aber eine Klebverbindung äußerst stark belastbar.

Gegebenenfalls ist es auch möglich, die Ränder der Außenhaut bzw. des Außenbleches 5 zwischen dem jeweiligen Schenkel 4' und der jeweiligen Randleiste bzw. dem jeweiligen Randprofil 6 ausschließlich durch Klemmung zu halten, d.h. eine Klebverbindung wird lediglich zwischen den Randleisten bzw. -profilen 6 und den Profilbereichen 4 des Profilteiles 1 vorgesehen.

Innenseitig der Außenhaut bzw. des Außenbleches 5 kann eine Beschichtung 7 aus wärme- und/oder schalldämmendem Material vorgesehen sein. Die Anordnung einer entsprechenden Beschichtung ist grundsätzlich auch innenseitig des Profilteiles 1 möglich.

Abweichend von der dargestellten Ausführungsform kann auch die Innenseite des Schenkels 4' mit der Innenseite des die Schenkel 4' und 4" verbindenden Teiles der Profilbereiche 4 einen stumpfen Winkel bilden, wie er bei der dargestellten Ausführungsform zwischen der Innenseite des Schenkels 4" und der Innenseite des die Schenkel 4' und 4" verbindenden Teiles des Profilbereiches 4 gebildet wird. Die Randleisten bzw. -profile 6 besitzen dann eine entsprechend angepaßte Form. Bei dieser Ausführungsform wird der in die Profilbereiche 4 hineinragende Randbereich der Außenhaut bzw. des Außenbleches 5 bei seiner Verklemmung bzw. Verkeilung innerhalb des Profilbereiches 4 entsprechend abgebogen. Dadurch wird die Möglichkeit geschaffen, daß die Außenseite der Außenhaut bzw. des Außenbleches 5 außerhalb der Profilbereiche 4 etwa in gleicher Ebene wie die Außenseite der Schenkel 4' angeordnet ist.

Im übrigen kann der Mittelbereich 3 des Profilteiles 1 auch als Hohlprofil ausgebildet sein, um eine erhöhte Steifigkeit zu gewährleisten. Soweit zwei in gleicher Ebene aneinander anschließende plattenförmige Elemente 2 mittels Profilteiles 1 verbunden werden sollen, kann daß Profilteil 1 auch ohne gesonderten Mittelbereich 3 mit einem etwa H-förmigen Querschnitt ausgebildet sein.

Grundsätzlich ist es auch möglich, den im Querschnitt bogenförmigen Mittelbereich 3 des dargestellten Profilteiles 1 nach Art eines Winkelprofiles zu formen. Der bogenförmige Querschnitt gewährleistet jedoch eine vergleichsweise große Unempfindlichkeit gegen Stöße, die zu Verformungen des Mittelbereiches 1 führen. Denn aufgrund der Bogenform werden dabei in der Regel die Profilbereiche 4 nicht deformiert, so daß auch die Verbindung mit den plattenförmigen Elementen 2 völlig unbeschädigt bleibt.

Die Profilteile 1 sowie die Randprofile 6 werden vorzugsweise als Strangpreßprofile aus Metall, z.B. Leichtmetall bzw. Aluminium, hergestellt. Gegebenenfalls können anstelle der als Randprofile 6 verwendeten Hohlprofile auch offene Profile mit etwa U-förmigem Querschnitt und vom Profilteil 1 abgewandter U-Öffnung benutzt werden.

In der Regel bilden die Profilteile 1 ein Traggerippe des Fahrzeugaufbaus, wobei die Profilteile 1 jeweils an den Längs- und Vertikalkanten des Aufbaus angeordnet werden. Die freien Felder dieses Traggerippes werden von den plattenförmigen Elementen 2 abgeschlossen, wobei die an den Rändern der Außenbleche 5 angeordneten Randprofile 6 jeweils miteinander rahmenartig verbunden und zusammen mit den Außenblechen 5 nach Art von Spannrahmen in den Profilteilen 1 gehalten sind.

Zur zusätzlichen Versteifung können einander gegenüberliegende Randprofile 6 miteinander gitterartig durch Streben verbunden sein, die im allgemeinen innenseitig des Außenbleches angeordnet sind.

Die erfindungsgemäßen Fahrzeugaufbauten zeichnen sich durch eine hohe Steifigkeit aus.

**Ansprüche**

1. Fahrzeugaufbau, insbesondere Kofferaufbau, dessen Wände, Böden und/oder Decken im wesentlichen aus plattenförmigen Elementen bestehen, die durch Profilteile zwischen aneinander angrenzenden Rändern miteinander verbunden sind, dadurch gekennzeichnet, daß die Profilteile (1) randseitige Nuten- bzw. Rinnenprofile (Profilbereiche 4) mit sich keilförmig öffnendem Querschnitt besitzen, in denen die Ränder der plattenförmigen Elemente (2) bzw. an den Rändern angeordnete Randleisten bzw. -profile (6) aufgenommen und durch Verkeilung sowie Klebung gehalten sind.

2. Fahrzeugaufbau nach Anspruch 1, dadurch gekennzeichnet, daß eine randseitig in die Rinne- bzw. Nutenprofile (Profilbereiche 4) hineinragende Außenhaut (5) der plattenförmigen Elemente (2) zwischen gegeneinander verspannten bzw. verkeilten Flächen der Rinnen- bzw. Nutenprofile (Profilbereiche 4) sowie der Randleisten bzw. -profile (6) eingeklemmt ist.

3. Fahrzeugaufbau nach einem der Ansprüche 1 oder 2, dadurch gekennzeichnet, daß die Außenhaut (5) randseitig am Rinnen- bzw. Nutenprofil (Profilbereich 4) bzw. an einer Innenfläche desselben verklebt ist.

4. Fahrzeugaufbau nach einem der Ansprüche 1 bis 3, dadurch gekennzeichnet, daß die Außenhaut (5) sowie die Randleisten bzw. -profile (6) miteinander verklebt sind.

5. Fahrzeugaufbau nach einem der Ansprüche 1 bis 4, dadurch gekennzeichnet, daß die Randleisten bzw. -profile (6) mit einer oder mehreren Innenflächen der Rinnen- bzw. Nutenprofile (Profilbereiche 4) verklebt sind.

6. Fahrzeugaufbau nach einem der Ansprüche 1 bis 5, dadurch gekennzeichnet, daß die Profilteile (1) jeweils zwei die Rinnen- bzw. Nutenprofile bildende Profilbereiche (4) mit U-Querschnitt besitzen.

7. Fahrzeugaufbau nach einem der Ansprüche 1 bis 6, dadurch gekennzeichnet, daß die die Außenseite der plattenförmigen Elemente (2) überlappende Innenfläche (am Schenkel 4′) der Rinnen- bzw. Nutenprofile (Profilbereiche 4) bzw. die dazu parallelen Gegenflächen der Randleisten bzw. -profile (6) in der Ebene der Außenseite bzw. parallel dazu angeordnet sind.

8. Fahrzeugaufbau nach einem der Ansprüche 1 bis 6, dadurch gekennzeichnet, daß die die Außenseite der plattenförmigen Elemente (2) überlappende Innenfläche der Rinnen- bzw. Nutenprofile (Profilbereiche 4) sowie die dazu parallelen Gegenflächen der Randleisten bzw. -profile (6) zur Ebene der Außenseite keilförmig geneigt angeordnet sind.

9. Fahrzeugaufbau nach einem der Ansprüche 1 bis 7, dadurch gekennzeichnet, daß die Profilteile (1) ein Traggerippe des Fahrzeugaufbaus bilden, indem diese Profilteile (1) zumindest an den Längs- und Vertikalkanten des Fahrzeugaufbaus angeordnet sind, und daß die an den Rändern der plattenförmigen Elemente (2) angeordneten Randleisten bzw. -profile (6) je Element rahmenartig miteinander verbunden und zusammen mit der Außenhaut (5) des Elementes in den Feldern des Traggerippes spannrahmenartig gehalten bzw. angeordnet sind.

10. Fahrzeugaufbau nach Anspruch 9, dadurch gekennzeichnet, daß zwei einander gegenüberliegende - z.B. die horizontalen - Randleisten bzw. -profile (6) eines plattenförmigen Elementes gitterartig durch - vorzugsweise innenseitig der Außenhaut (5) angeordnete - Streben miteinander verbunden sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 490 551 (R. LAUZIER)<br>* Figur 4; Seite 2, linke Spalte, Absätze 8,9 *<br>--- | 1 | B 62 D 25/02<br>B 62 D 33/04 |
| A | US-A-3 010 755 (J.J. BLACK)<br>* Figuren 1,2; Spalte 3, Zeilen 19-50 *<br>--- | 1 | |
| A | US-A-4 122 966 (M.O. ANDERSON)<br>* Figur 6; Spalte 4, Zeilen 16-41 *<br>----- | 1 | |

RECHERCHIERTE
SACHGEBIETE (Int. Cl.4)

B 62 D
B 61 D
E 04 C

Der vorliegende Recherchenbericht wurde für alle Patentansprüche erstellt

| Recherchenort | Abschlußdatum der Recherche | Prüfer |
|---|---|---|
| DEN HAAG | 01-12-1988 | CHLOSTA P. |